Europäisches Patentamt

European Patent Office

Office européen des brevets

(19)

(11) Veröffentlichungsnummer: **0 268 312**
**A1**

# EUROPÄISCHE PATENTANMELDUNG

(12)

(21) Anmeldenummer: **87201973.2**

(22) Anmeldetag: **14.10.87**

(51) Int. Cl.4: **C03B 37/012** , F26B 3/10

(30) Priorität: **18.10.86 DE 3635542**

(43) Veröffentlichungstag der Anmeldung:
**25.05.88 Patentblatt 88/21**

(84) Benannte Vertragsstaaten:
**DE FR GB NL**

(71) Anmelder: **Philips Patentverwaltung GmbH**
**Wendenstrasse 35 Postfach 10 51 49**
**D-2000 Hamburg 1(DE)**

(84) **DE**

(71) Anmelder: **N.V. Philips' Gloeilampenfabrieken**
**Groenewoudseweg 1**
**NL-5621 BA Eindhoven(NL)**

(84) **FR GB NL**

(72) Erfinder: **Clasen, Rolf, Dipl.-Phys., Dr.**
**Schlossparkstrasse 36**
**D-5100 Aachen(DE)**

(74) Vertreter: **Nehmzow-David, Fritzi-Maria et al**
**Philips Patentverwaltung GmbH**
**Wendenstrasse 35 Postfach 10 51 49**
**D-2000 Hamburg 1(DE)**

(54) Verfahren und Vorrichtung zum Trocknen keramischer Grünkörper.

(57) Verfahren zum Trocknen keramischer Grünkörper, wobei der Grünkörper (1) von einem Gaskissen (15) gestützt schwebend getrocknet wird unter Anwendung einer Vorrichtung mit einem der Geometrie des zu trocknenden Grünkörpers angepaßten Filterelement (3), in welches Gas unter Druck, vorzugsweise Preßluft, über eine Zuleitung (13) einleitbar ist, das an der dem zu trocknenden Grünkörper (1) gegenüberliegenden Oberfläche (5) des Filterelementes (3) durch porenartige, über diese gesamte Oberfläche gleichmäßig verteilte Öffnungen (7) austritt und dort ein Gaskissen (15) bildet

FIG.1

## Verfahren und Vorrichtung zum Trocknen keramischer Grünkörper

Die Erfindung bezieht sich auf ein Verfahren zum Trocknen verformter keramischer Grünkörper und auf eine Vorrichtung zur Durchführung eines solchen Verfahrens.

Das erfindungsgemäße Verfahren betrifft insbesondere die Trocknung von mechanisch empfindlichen, keramischen Grünkörpern, an die hohe Anforderungen bezüglich ihrer Oberflächenqualität sowie ihrer Geometrie gestellt werden. Ein besonderes Anwendungsgebiet liegt bei der Herstellung von langen Rohren und Stäben von Massen aus hochdispersen $SiO_2$-Pulvern, aus denen nach Trocknung und anschließender Reinigung hochreine Quarzglasrohre und -stäbe gesintert werden.

Bei den gebräuchlichen Herstellungsverfahren von Werkstücken aus feinkeramischen Massen, z.B. Strangpressen, Schleuderguß, Schlickerguß, elektrophoretische Abscheidung, muß die Dispergierflüssigkeit, in der Regel Wasser, nach der Formgebung in einem Trockenprozeß aus dem verformten Grünkörper wieder entfernt werden. Der Trockenprozeß kann dadurch Schwierigkeiten bereiten, daß die Oberflächenspannung der Dispergierflüssigkeit zu sehr großen Kräften zwischen den Feststoffteilchen der keramischen Masse und damit leicht zur Rißbildung führen kann. Ferner entstehen infolge der Schwindung der Grünkörper beim Trocknen durch die Reibung zwischen Form und Grünkörper (eine Ausnahme bilden hier durch Strangpressen hergestellte Grünkörper) Spannungen, die eine weitere Quelle zur Rißbildung darstellen.

Der Rißbildung wird im Regelfall dadurch begegnet, daß der keramischen Masse ein geeignetes Bindemittel zugesetzt wird, das dem Grünkörper die notwendige Festigkeit gibt, diese Spannungen aufzufangen. Solche Grünkörper können freistehend oder hängend getrocknet werden. Bei Massen, die als Feststoff kleinere, submikroskopische Teilchen enthalten, vergrößert sich das Problem der Rißbildung beim Trocknen des Grünkörpers, da die Anzahl der Kontaktstellen zwischen den einzelnen Teilchen rapide zunimmt. Wegen des mit abnehmender Teilchengröße zwangsweise abnehmenden erreichbaren Füllgrades an Feststoffteilchen wird auch die Grünkörperfestigkeit geringer. Daher können längere Grünkörper nur noch mechanisch unterstützt getrocknet werden. Dies trifft insbesondere für Grünkörper aus Massen ohne Bindemittelzusatz zu, die durch Vernetzung von hochdispersen $SiO_2$-Pulvern aus wässerigen Suspensionen geformt wurden.

Zum Stand der Technik gehört beispielsweise ein Verfahren zur Herstellung von Glaskörpern, bei dem aus dem Ausgangsmaterial für den Glaskörper in Form einer thixotropen Suspension ein poröser Grünkörper geformt und dieser anschließend gereinigt und gesintert wird, wobei das Ausgangsmaterial in einem Formwerkzeug durch Einkopplung mechanischer Kräfte verflüssigt und danach der Einwirkung der mechanischen Kräfte entzogen wird, wonach das Ausgangsmaterial wieder verfestigt und in nunmehr geformtem Zustand als Grünkörper vorliegt. Als Ausgangsmaterial für den Glaskörper wird dabei eine Suspension eingesetzt, die $SiO_2$-Partikel eines Durchmessers im Bereich von 10 bis 500 nm, vorzugsweise 15 bis 100 nm, mit einem mittleren Teilchendurchmesser von 40 nm und als Dispergierflüssigkeit Wasser enthält. Das Feststoff:Wasser-Gewichtsverhältnis bei einer derartigen Masse liegt im Bereich von 1:1 bis 2,5:1.

Bei nach einem solchen Verfahren hergestellten Grünkörpern erfolgt die Vernetzung der Feststoffpartikel zunächst nur über eine Wasserstoffbrückenbindung von Silanolgruppen, die mit fortschreitender Trocknung durch Siloxanbindungen verstärkt wird. Die Verfestigung der Grünkörper geschieht infolge des Thixotropieeffektes; dies bedeutet, daß der Grünkörper durch Scherbeanspruchung leicht wieder verflüssigt werden kann.

Werden mechanische Unterstützungen, z.B. Holzrinnen, beim Trocknen von Grünkörpern eingesetzt, werden die Oberflächen der zu trocknenden Grünkörper beschädigt, wenn der Grünkörper beim Trocknen schwindet. Außerdem besteht bei langen Grünkörpern die große Gefahr der Rißbildung. Eine horizontale, mechanisch unterstützte Trocknung kann bei dünnwandigen Rohren zusätzlich zu deren Abplattung und damit zu einer unerwünschten Geometrieänderung führen. Bei Grünkörpern größerer Länge muß auch eine freistehende oder hängende Trocknung ausscheiden, da sich der feuchte Grünkörper unter seinem Eigengewicht zu leicht verformt oder aus der Aufhängung abreißt.

Der Erfindung liegt die Aufgabe zugrunde ein Verfahren und eine Vorrichtung anzugeben, mit denen mechanisch sehr empfindliche keramische Grünkörper rißfrei und ohne Beschädigungen ihrer Oberfläche getrocknet werden können.

Diese Aufgabe wird erfindungsgemäß dadurch gelöst, daß der Grünkörper von einem Gaskissen gestützt schwebend getrocknet wird.

Nach vorteilhaften Weiterbildungen des erfindungsgemäßen Verfahrens wird in dem das Gaskissen aufbauenden Gas, z.B. Luft, ein gewünschter Feuchtigkeitsgehalt eingestellt und/oder es wird ihm eine gewünschte Temperatur erteilt. Auf diese Weise kann die Trockengeschwindigkeit den verschiedenen Trockenphasen des Grünkörpers

optimal angepaßt werden, es kann z.B. eine hohe konstante Trockenrate während der Schwindung des Grünkörpers, eine langsame Trocknung während einer Übergangsphase und wiederum eine schnelle Trocknung nach Beendigung der Schwindung eingestellt werden.

Dem das Gaskissen aufbauenden Gas einen gewünschten Feuchtigkeitsgehalt zu erteilen, ist insbesondere angezeigt, wenn als Dispergierflüssigkeit für die keramische Masse, aus der der zu trocknende Grünkörper hergestellt wurde, Wasser verwendet wurde.

Eine Vorrichtung zur Durchführung des Verfahrens ist gekennzeichnet durch ein der Geometrie des zu trocknenden Grünkörpers angepaßtes Filterelement, in welches Gas unter Druck, vorzugsweise Preßluft, über eine Zuleitung einleitbar ist, das an der dem zu trocknenden Grünkörper gegenüberliegenden Oberfläche des Filterelementes durch porenartige, über diese gesamte Oberfläche gleichmäßig verteilte Öffnungen austritt und dort ein Gaskissen bildet.

Nach vorteilhaften weiteren Ausgestaltungen der erfindungsgemäßen Vorrichtung ist in der Zuleitung des Gasstromes eine Befeuchtungsanlage angeordnet und/oder es ist in der Zuleitung des Gasstromes eine Heizeinrichtung angeordnet.

Nach einer weiteren vorteilhaften Ausgestaltung der erfindungsgemäßen Vorrichtung ist eine Halterung vorgesehen, mit welcher der zu trocknende Grünkörper mindestens an einem Endbereich zu haltern und vorzugsweise zu drehen ist. Durch die Möglichkeit der Drehung des Grünkörpers ist bei rotationssymmetrischen Grünkörpern die Möglichkeit gegeben, daß eine besonders effiziente Trocknung von allen Seiten des Grünkörpers erreicht werden kann.

Bei Grünkörpern kleinerer Abmessungen kann den Grünkörpern z.B. aber auch eine Drehbewegung allein durch entsprechende Beeinflussung der Störmungsverhältnisse des Gases innerhalb des Gaskissens, z.B. durch entsprechende Ausrichtung eines Teils der porenartigen Öffnungen des Filterelementes, erteilt werden

Die mit der Erfindung erzielbaren Vorteile bestehen insbesondere darin, daß eine rißfreie Trocknung mechanisch sehr empfindlicher keramischer Grünkörper auch längerer Abmessungen möglich ist. Es wurden Grünkörper mit Trockenschwindungen im Bereich von 2 bis 20% rißfrei getrocknet. Ein weiterer Vorteil der Erfindung ist, daß keine Beschädigungen der Oberfläche des Grünkörpers beim Trocknen eintreten: es wurden keramische, getrocknete Grünkörper mit sehr glatten Oberflächen hergestellt, die eine Oberflächenrauhigkeit < 1 μm aufwiesen.

Ein weiterer Vorteil des erfindungsgemäßen Verfahrens unter Anwendung der erfindungsgemäßen

Vorrichtung ist, daß eine schnelle und effiziente Trocknung von keramischen Grünkörpern möglich ist.

Ein weiterer Vorteil ist, daß Deformationen des Grünkörpers während des Trocknungsprozesses nahezu vermieden werden können: dies ist besonders wichtig bei der Herstellung von langen Quarzglasrohren, die z.B. als Vorform für die Herstellung von optischen Wellenleitern oder für die Herstellung von Lampenkolben für insbesondere Halogen- oder Gasentladungslampen eingesetzt werden. Bei Grünkörpern einer Länge von 1 bis 2 m wurden Deformationen von weniger als 0,1% gemessen.

Als Ausführungsbeispiel werden die Herstellung eines Grünkörpers aus einer wässerigen Suspension, die als Feststoff $SiO_2$-Partikel eines Durchmessers im Bereich von 15 bis 100 nm mit einem mittleren Teilchendurchmesser von 40 nm enthielt und ein Feststoff:Wasser-Gewichtsverhältnis von 1:1 hatte sowie die Trocknung dieses Grünkörpers beschrieben.

Die Figuren zeigen:

Fig. 1 schematische Darstellung einer Trockenvorrichtung gemäß der Erfindung,

Fig. 2 schematische Darstellung einer Trockenvorrichtung entsprechend Fig. 1 mit einer drehbaren Halterung für den zu trocknenden Grünkörper.

Ein nach dem erfindungsgemäßen Verfahren unter Anwendung der erfindungsgemäßen Vorrichtung zu trocknender Grünkörper wurde wie folgt hergestellt:

In einem Glasgefäß werden 500 g von im Handel erhältlichem, pyrogenem $SiO_2$ einer mittleren Teilchengröße von 40 nm in 425 ml Wasser und 75 ml wässeriger Ammoniumfluoridlösung (5%) dispergiert und mittels Ultraschall (f = 35 kHz) homogenisiert, bis eine niedrigviskose Suspension erreicht ist. Diese Suspension wird in einen Polyäthylenterephtalat-Schlauch eines Durchmessers von 40 mm und einer Länge von 500 mm gegossen. Nach einer Ruhezeit von ≈ 5 h ist die Suspension im Schlauch erstarrt und der Schlauch wird mechanisch von dem erstarrten Grünkörper entfernt. Es kann jedoch auch so vorgegangen werden, daß der Schlauch chemisch vom Grünkörper abgelöst wird.

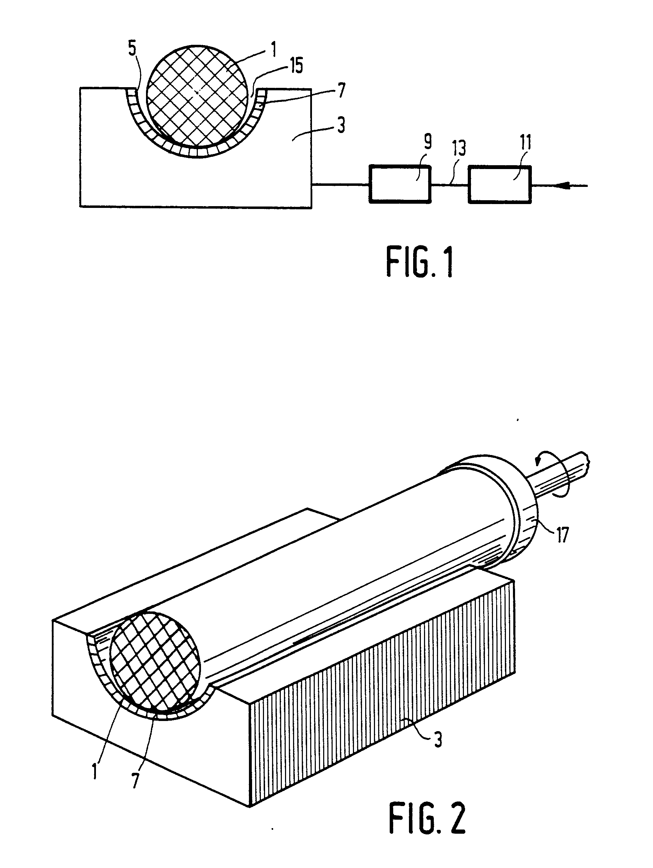

Für die anschließende Trocknung des so erhaltenen Grünkörpers wird eine Vorrichtung eingesetzt, wie sie in den Figuren 1 und 2 schematisch dargestellt ist mit einem der Geometrie eines zu trocknenden Grünkörpers 1 angepassten Filterelement 3, welches an seiner dem zu trocknenden Grünkörper 1 gegenüberliegenden Oberfläche 5 mit porenartigen, über die gesamte Oberfläche 5 gleichmäßig verteilten Öffnungen 7 versehen ist, über die ein unter Druck in das Filterelement 3 über eine Zuleitung 13 eingeleitetes Gas in Richtung auf den zu trocknenden Grünkörper 1 austreten kann und unter dem zu trocknenden Grünkörper 1 ein Gaskissen 15 bildet. Die Öffnungen 7 haben beispielsweise einen lichten Durchmesser von 1 m. Das Filterelement 3 ist vorzugsweise aus Edelstahl hergestellt. In der Zuleitung 13 für das Druckgas sind zweckmäßigerweise eine Befeuchtungsanlage 9 und eine Heizeinrichtung 11 angeordnet. Es kann eine Halterung 17 vorgesehen werden, mit welcher der zu trocknende Grünkörper 1 wenigstens an einem Endbereich zu haltern und zu drehen ist. Die Halterung 17 wird in ihrem Angriffsbereich den zu trocknenden Grünkörper 1 naturgemäß beschädigen, so daß dieser Grünkörperbereich in einem späteren Prozeßschritt, z.B. nach der Trocknung, abgeschnitten werden muß. Bei einem Grünkörper 1 in Rohr-oder Stabform hat die Oberfläche des Filterelementes 3 eine gekrümmte, der Krümmung des zu trocknenden Grünkörpers 1 angepaßte Oberfläche 5, wobei der Krümmungsradius des Grünkörpers 1 zweckmäßigerweise etwa 98 bis 60 % des Krümmungsradius der Oberfläche 5 beträgt. Mit Hilfe der Befeuchtungsanlage 9 kann dem über die Gaszuleitung 13 eingeleiteten Gas, insbesondere ist hier an Luft zu denken, eine relative Feuchtigkeit zwischen 10 und 95 % und mit Hilfe der Heizeinrichtung 11 kann dem Gas eine Temperatur zwischen 4 und 95 °C erteilt werden.

Ein Trocknungsverfahren eines wie oben beschrieben hergestellten Grünkörpers 1 eines Durchmesser von 40 mm und einer Länge von 500 mm wird wie folgt ausgeführt:
Der Grünkörper 1 wird auf das oberhalb der Oberfläche 5 des Filterelementes 3 gebildete Gaskissen 15 gelegt, wobei das Filterelement 3 eine Länge von 600 mm und dessen Oberfläche 5 einen Krümmungsradius von 22 mm hat. Das über die Zuleitung 13 einströmende Gas wird von außen mit einem Druck von 0,6 bar beaufschlagt. Die Gastemperatur beträgt 24 °C, die relative Feuchtigkeit 50 % während des gesamten Trockenvorganges. Der Grünkörper 1 wird langsam mit etwa 3 Umdrehungen/min mittels der Halterung 17 um seine Längsachse gedreht.

Nach 2,5 Stunden ist die Schwindungsphase abgeschlossen, der anfänglich dunklere, noch feuchte Grünkörper wird weiß. Nach weiteren 3 Stunden ist auch das restliche Porenwasser zu über 90 % beseitigt. Zum Schluß wird der Grünkörper noch 1 Stunde in einem Trockenschrank bei 80 °C gelagert.

Der Grünkörper ist rißfrei getrocknet und weist eine glänzende, unbeschädigte Oberfläche auf. Eine Deformation des Grünkörpers war nicht zu beobachten. Der Durchmesser des getrockneten Grünkörpers betrug 36 mm.

Der getrocknete Grünkörper wird in einem zweistufigen Reinigungsprozeß bei einer Temperatur von zunächst 400 und anschließend 1000 °C jeweils 2 Stunden in einer Thionylchlorid/Sauerstoff-Atmosphäre gereinigt und dann in einer Helium/Chlor-Atmosphäre bei einer Temperatur von 1500 °C zu einem transparenten, rißfreien Quarzglasstab mit einer glänzenden Oberfläche gesintert.

## Ansprüche

1. Verfahren zum Trocknen verformter keramischer Grünkörper, dadurch gekennzeichnet,
daß der Grünkörper von einem Gaskissen gestützt schwebend getrocknet wird.

2. Verfahren nach Anspruch 1, dadurch gekennzeichnet,
daß das Gaskissen aus Luft gebildet wird.

3. Verfahren nach den Ansprüchen 1 und 2, dadurch gekennzeichnet,
daß der Grünkörper zusätzlich in mindestens einem Endbereich in einer Halterung befestigt wird.

4. Verfahren nach Anspruch 3, dadurch gekennzeichnet,
daß der Grünkörper mittels der Halterung gedreht wird.

5. Verfahren nach mindestens einem der Ansprüche 1 bis 4, dadurch gekennzeichnet,
daß in dem das Gaskissen aufbauenden Gas ein gewünschter Feuchtigkeitsgehalt eingestellt wird.

6. Verfahren nach mindestens einem der Ansprüche 1 bis 5, dadurch gekennzeichnet,
daß dem das Gaskissen aufbauenden Gas eine gewünschte Temperatur erteilt wird.

7. Verfahren nach den Ansprüchen 1 bis 6, dadurch gekennzeichnet,
daß ein aus einer wässerigen, thixotropen, $SiO_2$-Partikel eines Durchmessers im Bereich von 10 - 500 nm, vorzugsweise 15 - 100 nm und eines mittleren Teilchendurchmessers von 40 nm enthaltenden Suspension eines Feststoff:Wasser-Gewichtsverhältnisses von 1:1-2,5:1 geformter Grünkörper getrocknet wird

8. Vorrichtung zur Durchführung des Verfahrens nach den Ansprüchen 1 bis 7, gekennzeichnet durch ein der Geometrie des zu trocknenden Grünkörpers 1 angepasstes Filterelement 3, in welches Gas unter Druck, vorzugsweise Preßluft, über eine Zuleitung 13 einleitbar ist, das an der dem zu trocknenden Grünkörper gegenüberliegenden Oberfläche 5 des Filterelementes durch porenartige, über diese gesamte Oberfläche gleichmäßig verteilte Öffnungen 7 austritt und dort ein Gaskissen 15 bildet.

9. Vorrichtung nach Anspruch 8, <u>dadurch ge-</u><u>kennzeichnet,</u>
daß in der Zuleitung 13 eine Befeuchtungsanlage 9 angeordnet ist.

10. Vorrichtung nach den Ansprüchen 8 und 9, <u>dadurch</u> <u>gekennzeichnet,</u>
daß in der Zuleitung 13 eine Heizeinrichtung 11 angeordnet ist.

11. Vorrichtung nach den Ansprüchen 8 bis 10, <u>dadurch</u> <u>gekennzeichnet,</u>
daß eine Halterung 17 vorgesehen ist, mit welcher der zu trocknende Grünkörper 1 mindestens an einem Endbereich zu haltern ist.

12. Vorrichtung nach Anspruch 11, <u>dadurch</u> <u>gekennzeichnet,</u>
daß dem Grünkörper 1 mittels der Halterung 17 eine Drehbewegung zu erteilen ist.

FIG.1

FIG.2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-A-2 803 455 (ELINO INDUSTRIE-OFENBAU CARL HANF GmbH) * Insgesamt * | 1,2,6 | C 03 B 37/012 F 26 B 3/10 |
| Y | | 3,4 | |
| A | | 8,10,11 | |
| | --- | | |
| Y | EP-A-0 187 230 (GTE LABORATORIES INC.) * Insgesamt * | 3,4 | |
| A | | 11,12 | |
| | --- | | |
| A | GB-A-1 025 500 (CORNING GLASS WORKS) * Insgesamt * | 1,2,8 | |
| | --- | | |
| A | US-A-4 168 579 (ERICSSON) * Insgesamt * | 5,9 | |
| | --- | | |
| A | EP-A-0 196 716 (PHILIPS PATENTVERWALTUNG GmbH) * Ansprüche 1-4 * | 7 | |
| | --- | | |
| A | FR-A-1 286 161 (THE METAL BOX CO. LTD) ----- | | |

RECHERCHIERTE SACHGEBIETE (Int. Cl.4)

C 03 B
F 26 B

Der vorliegende Recherchenbericht wurde für alle Patentansprüche erstellt

| Recherchenort | Abschlußdatum der Recherche | Prüfer |
|---|---|---|
| DEN HAAG | 18-01-1988 | SILVIS H. |

EPO FORM 1503 03 82 (P0403)